# EUROPEAN PATENT APPLICATION

(11) **EP 4 711 072 A1**
(43) Date of publication of application: **18.03.2026**
(21) Application number: 25202017.7
(22) Date of filing: 12.09.2025
(51) Int. Cl.: B23K 26/211, B23K 26/32

(54) **FUNCTIONALIZED ALUMINIUM ALLOY PARTS FOR REMOTE LASER WELDING**

(30) Priority: 13.09.2024 NO 20240934
(71) Applicant: Hydro Extruded Solutions AS, 0240 Oslo (NO)
(72) Inventor: Máté, Molnár, 8095 Pákozd (HU); Osikowicz, Wojciech, 612 81 Finspång (SE); Skubich, Alexis, 69006 Lyon (FR)
(74) Representative: Hydro IPD

(57) **Abstract**

The present application relates to a functionalized aluminium alloy workpiece that is adapted for autogenous laser welding joining with one or more joint aluminium alloy component(s), wherein the functionalized aluminium alloy workpiece is made of a base material of an aluminium alloy susceptible to solidification cracking during autogenous laser welding, and comprises one or more location(s) configured for autogenous laser welding joining with the one or more joint aluminium alloy component(s). The one or more location(s) configured for autogenous laser welding comprises an additive manufactured functional structure made of a weldable aluminium alloy. The application further relates to a method of joining the functionalized aluminium alloy workpiece with a joint aluminium alloy component by an autogenic laser welding process.

## Description

### TECHNICAL FIELD

The present invention relates to autogenous laser welding of aluminium alloy parts, and in particular alloys that are prone to cracking during solidification when no filler wire is used. Furthermore, the invention relates to a functionalized aluminium alloy workpiece with functional structures for enabling such autogenous laser welding.

### BACKGROUND ART

An autogenous laser welding process is particularly interesting for remote welding operations. In this type of welding process no filler material is used. A welding joint is formed by local melting of base materials and fusing them together as the molten pool solidifies. The autogenous laser welding technology is highly interesting for the automotive sector because of the ease of operation and high productivity. However, joining parts of some aluminium alloys, e.g. several types of AA6xxx aluminium alloys, using autogenous laser welding process is notoriously difficult. Several types of aluminium AA6xxx alloys are highly susceptible to cracking during solidification of the local molten pools formed during remote laser welding because of wide range of solidification temperatures and the high solidification rates of aluminium. In beam and arc welding these difficulties are normally addressed by changing the chemistry of the molten pool through addition of filler wire with high silicon or high magnesium content. In autogenous laser welding process, no filler wire is applied and using such welds with AA6xxx aluminium alloys easily leads to cracking in the weld seam, and, in addition, porosity can occur in the weld seam due to rapid solidification of the weld pool trapping gases within the weld. These challenges may lead to unreliable joint quality, and it may therefore be difficult or impossible to guarantee mechanical properties or tightness of such welded joints.

Therefore, there is a need for a solution allowing autogenous laser welding of workpieces made of aluminium alloys that generally are highly susceptible to cracking in weld seams, without the said shortcomings of solidification cracking and unreliable joint qualities.

### SUMMARY OF INVENTION

The present invention is directed at a solution allowing autogenous laser welding of workpieces made of aluminium alloys that are prone to solidification cracking, thus solving or at least reducing the shortcomings mentioned above.

The present invention is set forth and characterized in the appended independent claims, while the dependent claims describe other characteristics of the invention.

**It** is described a functionalized aluminium alloy workpiece adapted for autogenous laser welding joining with one or more joint aluminium alloy component(s), wherein the functionalized aluminium alloy workpiece has at least a first surface and at least one edge, and comprises one or more location(s) on the at least first surface and/or the at least one edge, configured for autogenous laser welding joining with the one or more joint aluminium alloy component(s), wherein the one or more location(s) configured for autogenous laser welding comprises an additive manufactured functional structure made of a weldable aluminium alloy.

According to a first aspect, it is provided a functionalized aluminium alloy workpiece for use in an autogenous laser welding process the workpiece base material is made of a first aluminium alloy susceptible to solidification cracking during autogenous laser welding; wherein the workpiece further comprises an additive manufactured functional structure made of a second aluminium alloy that is weldable and not susceptible to solidification cracking; the additive manufactured functional structure is arranged on one or more locations of the workpiece, said locations being configured for a subsequent autogenous laser welding operation to join the workpiece to a joint aluminium alloy component; and wherein the additive manufactured functional structure is configured to melt and mix with the workpiece base material and the joint aluminium alloy component during said subsequent autogenous laser welding operation to form a local molten pool having a composition that is less susceptible to solidification cracking than the first aluminium alloy.

The functionalized aluminium alloy workpiece may include an extruded profile, a sheet material, a wrought material, a forged material, or a machined material. The functionalized aluminium alloy workpiece base material (first aluminium alloy) may be selected from an AA2xxx series aluminium alloy, an AA6xxx series aluminium alloy or an AA7xxx series aluminium alloy. The functionalized aluminium alloy workpiece base material is an aluminium alloy sensitive to solidification cracking in the weld fusion zone during autogenous laser welding.

The weldable aluminium alloy (second aluminium alloy) is an alloy that is not prone to solidification cracking in the weld fusion zone, hence, the second aluminium alloy is different from the first aluminium alloy. The weldable aluminium alloy may be selected from an AA1xxx series aluminium alloy, an AA4xxx series aluminium alloy, an AA5xxx series, or an AA8xxx series aluminium alloy.

The additive manufactured functional structure may be arranged on a first surface of the aluminium alloy workpiece. The additive manufactured functional structure may extend continuously over a length of the first surface. Alternatively, the additive manufactured functional structure may be arranged as two or more discrete structures, which together may extend over a length of the first surface. **In** another alternative embodiment, the additive manufactured functional structure may be comprised of a plurality of discrete structures.

The workpiece may have at least one edge, and the additive manufactured functional structure may be arranged on the at least one edge of the workpiece. The additive manufactured functional structure may extend continuously over a length of the at least one edge. Alternatively, the additive manufactured functional structure may be arranged as two or more discrete structures, which together may extend over a length of the at least one edge. **In** another alternative embodiment, the additive manufactured functional structure may be comprised of a plurality of discrete structures on the said edge.

The above described functionalized aluminium alloy workpiece may be manufactured by a method comprising the steps: a) providing the aluminium alloy workpiece, the workpiece having at least a first surface and at least one edge; b) depositing by additive manufacturing one or more layers of a second aluminium alloy, which is weldable and not prone to solidification cracking, on one or more location(s) on the at least first surface and/or the at least one edge, the said one or more location(s) being configured for autogenous laser welding; and c) optionally post treating the aluminium alloy workpiece of step b).

The step b) may comprise depositing the one or more layers of the weldable aluminium alloy forming a functional structure extending continuously over a length of the at least first surface, or the at least one edge. Alternatively, the step b) may comprise depositing the one or more layers of the weldable aluminium alloy as two of more discrete structures forming two or more functional structures, on the least first surface, or the at least one edge. In another alternative, the one or more layers of the weldable aluminium alloy may be deposited as a plurality of discrete structures.

The additive manufacturing deposition may be done by a D3 layer printing method selected from Direct Energy Deposition (DED) method, laser Powder Bed Fusion deposition method or electron beam Powder Bed Fusion deposition method. Preferably the additive manufacturing deposition is done by a DED method, more preferably by wire arc additive manufacturing (WAAM).

The step b) may comprise depositing on top of each other from two to ten layers of the weldable aluminium alloy by wire arc additive manufacturing.

The weldable aluminium alloy may be selected from an AA1xxx series aluminium alloy, an AA4xxx series aluminium alloy, an AA5xxx series aluminium alloy, or an AA8xxx series aluminium alloy.

The optional step c) may comprise machining, e.g. milling, the deposited additive manufacture layers of weldable aluminium alloy to a predetermined shape and dimension.

According to a second aspect, the present disclosure relates to a method for joining the above-described functionalized aluminium alloy workpiece with one or more joint aluminium alloy component(s) using autogenous laser welding, wherein the method comprises the following steps:
a. providing the functionalized aluminium alloy workpiece, and one or more joint aluminium alloy component(s);
b. positioning the workpiece and the one or more aluminium alloy component(s) to be joined relative to each other in a welding configuration; and
c. welding the workpiece to the one or more aluminium alloy component(s) by directing and passing an autogenous laser welding beam on the additive manufactured structure thereby melting the additive manufactured functional structure, a portion of the workpiece base material, and a portion of the joint aluminium alloy component to form a local molten pool, fusing the workpiece and joint aluminium alloy component together, forming a weld seam.

By the autogenous laser welding of the functionalized aluminium alloy workpiece and the one or more joint aluminium component, no filler wire is used during the welding operation. Furthermore, the autogenous laser welding process do not involve use of shielding gas.

The functionalized aluminium alloy workpiece and the joint aluminium alloy component(s) may be positioned in an overlapping weld configuration. Alternatively, the functionalized aluminium alloy workpiece and the joint aluminium alloy component(s) may be positioned in an edge or fillet weld configuration.

According to a third aspect, the present disclosure relates to the use of the above-described functionalized aluminium alloy workpiece, in an autogenous laser welding process for joining the functionalized aluminium alloy workpiece with one or more joint aluminium alloy component(s), without using a filler wire.

Aluminium alloys referred to in the present disclosure are designated according to the "The Aluminum Association" Registration Record Series Teal Sheets, which registration record is periodically updated with new published revisions. The alloys may be denoted with or without "AA", such as AA6xxx or 6xxx which should be understood to refer to the same alloy series.

"Autogenous laser welding" in the present context should be understood to include a fusion welding process wherein two metal pieces are joined together without using filler wire or shielding gas. The laser beam melts the metals at the joint, and the heat generated by the laser fusion process creates a local pool of molten metal fusing the two metal pieces together. In the present context the two metal pieces are made of aluminium alloy.

In the present disclosure, the term "aluminium alloy workpiece" should be understood to include a structural component or a semi-finished component made of aluminium alloy, which component may have undergone various processing steps such as cutting, welding, shaping and drilling.

The workpiece, after being functionalized and laser welded according to the present disclosure, may be further processed by e.g. cutting, drilling, welding, shaping or other fabrication methods, to form a final product. The final product may be a structural part to be used in industries like automotive, building and construction, aviation, solar, wind turbine, etc.

### BRIEF DESCRIPTION OF DRAWINGS

Fig. 1a illustrates in a perspective view, a hollow extruded profile workpiece of aluminium.
Fig. 1b illustrates in a cross-section view a hollow extruded profile including two flanges.
Fig. 1c illustrates in a cross-section view a solid extrusion profile having two straight leg portions connected by a curved portion, alternatively, the profile shown in Fig. 1c is a bent sheet or plate aluminium workpiece.
Fig. 2a illustrates in a side view a functionalized workpiece in an overlapping welding position with a joint aluminium alloy component.
Fig. 2b illustrates in a top view a functionalized workpiece in an overlapping welding position with a joint aluminium alloy component, wherein the functionalized workpiece has a continuous flange of AM functional structure on its edge.
Fig. 2c illustrates a corresponding configuration as in Fig. 2b, wherein the functionalized workpiece has three discrete flanges of AM functional structure on its edge.
Fig. 3a illustrates in a side view a functionalized workpiece in an edge or fillet welding position with a joint aluminium alloy component.
Fig. 3b illustrates in a top view a functionalized workpiece in an edge or fillet welding position with a joint aluminium alloy component, wherein the functionalized workpiece has a continuous flange of AM functional structure on its edge.
Fig. 3c illustrates a corresponding configuration as in Fig. 3b, wherein the functionalized workpiece has three discrete flanges of AM functional structure on its edge.
Fig. 4a illustrates a cross-section of an extruded profile workpiece having an outer surface which is partly curved, forming a first surface welding position.
Fig. 4b illustrates the profile of Fig. 4a, having an AM protruding structure deposited on the first surface.
Fig. 4c illustrates the functionalized workpiece, wherein the AM structure is machined and formed to a functional structure.
Fig. 4d illustrates the functionalized workpiece of Fig. 4c in a welding position with a joint aluminium alloy component.
Fig. 5 is a micrograph showing a cross-section of a functionalized workpiece of 6060 aluminium alloy welded by autogenous laser welding with a 6082 aluminium alloy in an edge welding configuration.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims.

When ranges are disclosed in the present disclosure, such ranges include the end values of the range, unless explicitly disclosed otherwise. Similarly, if an open range is disclosed, the open range also includes the single end value of the open range, unless explicitly disclosed otherwise.

Industrial production of structural components or semifinished structural components made of aluminium alloy, e.g. for use in the automotive industry, may involve several manufacture steps. **An** initial aluminium alloy base material workpiece may e.g. be a rolled sheet or an extruded profile, which may have been subjected to cutting, punching, shaping or other forming operations and further to be joined with another aluminium alloy part by a welding operation. Drivers in the aluminium industry are processes that are efficient and allows high productivity while ensuring that the quality of manufactured parts meet strict demands from e.g. original equipment manufacturers (OEM) or material standards. Autogenous laser welding has advantages such as high speed compared to traditional welding methods, high precision, and may led to less thermal distortion in the welded parts due to localized heating.

The present disclosure relates to a functionalized aluminium alloy workpiece (hereafter also denoted "functionalized workpiece") adapted for autogenous laser welding joining with one or more joint aluminium alloy component(s) (hereafter also denoted "joint component"). The functionalized workpiece comprises a base material made of a first aluminium alloy susceptible to solidification cracking during autogenous laser welding. The workpiece comprises a first surface and at least one edge, wherein one or more locations on the first surface and/or the at least one edge is configured for autogenous laser welding joining with the one or more joint component(s). The one or more locations configured for autogenous laser welding comprises additive manufactured functional structure deposited thereon (hereafter "additive manufactured functional structure" may also be denoted "AM functional structure" or "AM structure" or "AM layer" or "AM material") made of a weldable, second aluminium alloy.

The term "weldable aluminium alloy" should be understood to be a second aluminium alloy that is compatible with the base material, and which is not susceptible to solidification cracking in the fusion weld zone after autogenous laser welding, i.e. remote laser welding without the use of a filler material. Thus, the "weldable aluminium alloy" is an aluminium alloy that, when melted by the laser beam, forms a local molten pool alloy composition together with the functionalized workpiece base alloy and the joint component base alloy that is not prone to solidification cracking in the fusion weld zone.

The herein disclosed functionalized aluminium alloy workpiece enables autogenous laser welding (i.e. remote laser welding without use of filler wire) of structural components made of aluminium alloys that are prone to solidification cracking in the fusion weld zone. Examples of aluminium alloys that are susceptible to solidification cracking in the fusion weld seam, especially during remote laser welding without a filler wire, are the aluminium alloys that have a wide non-equilibrium solidification temperature range, i.e. the temperature interval from the liquidus temperature, T(liq.), wherein the alloy is fully melted, and the solidus temperature, T(solidus), wherein the alloy is completely solidified. A fusion zone during laser welding is typically a non-equilibrium system due to local segregation, non-controlled cooling and other factors influencing the solidification range, thus also the cracking susceptibility of an aluminium alloy. According to literature, alloys having a solidification temperature range of about 50 °C or more are, or may be sensitive to solidification cracking. The higher the solidification temperature range the higher the susceptibility will be of cracking in the fusion weld seam. Several alloys of the AA6xxx alloy series and the AA7xxx alloys series typically have a wide solidification temperature range of about 50 °C or more, and some 7xxx and 2xxx alloys may have solidification ranges larger than 100 °C, and such alloys are therefore highly prone to solidification cracking in autogenous laser welded seams. In a preferred embodiment the functionalized workpiece base material disclosed herein is made of a 6xxx series aluminium alloy. The 6xxx type of aluminium alloys have extensive use in a variety of fields, such as in the automotive industry where both extruded and rolled products of 6xxx alloys are used in such as body in white structural body parts, impact beams, bumpers and crash boxes, battery boxes and frame, panels and trims, etc, in building and constructions, aviation, solar frame systems, transportation, etc.

The workpiece base material may have been subjected to an aging treatment, such as artificial aging, or thermomechanical aging before being functionalized. Typically, for a heat treatable base material alloy, the workpiece base material may be in a T6 condition (peak aged) or a stabilized T4 condition before deposition of AM functional structures. A workpiece base material that initially has T6 condition might become locally overaged during the step of additive manufacture deposition of AM functional structures. Local overaging may be reduced by cooling the workpiece, e.g. by forced air cooling, during and/or between the deposition of the AM layers.

The functionalized workpiece according to the present disclosure is configured to be welded to another joint aluminium component. The joint aluminium component may be e.g. an extruded profile, a sheet or plate, a wrought or forged part or a casted part, and it may be formed of an aluminium alloy which is highly, moderately or low solidification crack sensitive in a laser welding process without use of a filler wire, for the same reasons as explained above.

The positions configured for weld seams on the aluminium workpiece to be functionalized are prepared for welding by AM depositing layers of aluminium alloy, which AM deposited layers are made of an aluminium alloy that has good welding properties and is compatible with the base material of the workpiece and the joint component. During autogenous laser welding the laser beam locally melts the deposited AM layers, thus the AM deposited alloy is fused and mixed with the more crack susceptible base material of the workpiece and the joint component material, moving the alloy composition of the fusion zone to a more favourable composition. The resulting weld seam is less crack sensitive, and a reliable joint formed by autogenous laser welding is thus obtained.

The AM functional structures of a weldable aluminium alloy are preferably made from an aluminium alloy having a solidification temperature range, T (liq.) - T (solidus), of below 50 °C, or below 45 °C. The weldable alloy forming the AM functional structures is preferably an alloy selected from the AA1xxx series aluminium alloy, an AA4xxx series aluminium alloy, an AA5xxx series aluminium alloy, or an AA8xxx aluminium alloy, all of which being alloys known for good weldability and are not prone to solidification cracking in the fuse zone. Preferably the weldable aluminium alloy is selected from a 4xxx aluminium alloy or a 5xxx aluminium alloy. The 4xxx series aluminium alloy contains Si as the primary alloying element which lowers the melting point and has excellent fluidity and welding properties. Examples of suitable 4xxx alloys are 4043, 4047, 4643 and 4010, all of which having excellent welding characteristics and compatibility with various aluminium base metals, however the present disclosure is not limited to the exemplified 4xxx alloys since other 4xxx series alloys may also be used. The high silicon content of the 4xxx series alloys can result in a darker and less consistent anodized finish compared with other alloy series, like 5xxx or 6xxx series aluminium alloys.

The 5xxx series aluminium alloys contains Mg as the primary alloying element and are also known for good weldability and may produce good quality weld in remote laser welding processes without use of filler material. Examples of suitable 5xxx alloys are 5356, 5357, 5083, 5183, 5087, 5059 and 5456, all of which having excellent weldability and providing high weld strength, however the present disclosure is not limited to the exemplified 5xxx alloys since other 5xxx alloys may also be used. The anodizing properties of 5xxx alloys are generally good, and AM functional structures of 5xxx alloys may therefore be preferred for components that will be subjected to anodization.

The AM functional structure may be deposited as a relatively thin and narrow layer or strip of material on the aluminium workpiece, forming a micro flange of the AM functional structure at the locations of weld seams. The AM micro flange may be a continuous strip of material or comprise two or more discrete micro flanges deposited on the locations of the weld seams. The AM micro flange may be deposited on a surface of the workpiece and/or on an edge or tip of the workpiece. Depositing a plurality of small, discrete micro flanges of the AM functional structure enables spot welding of crack sensitive aluminium alloys by use of autogenous laser welding.

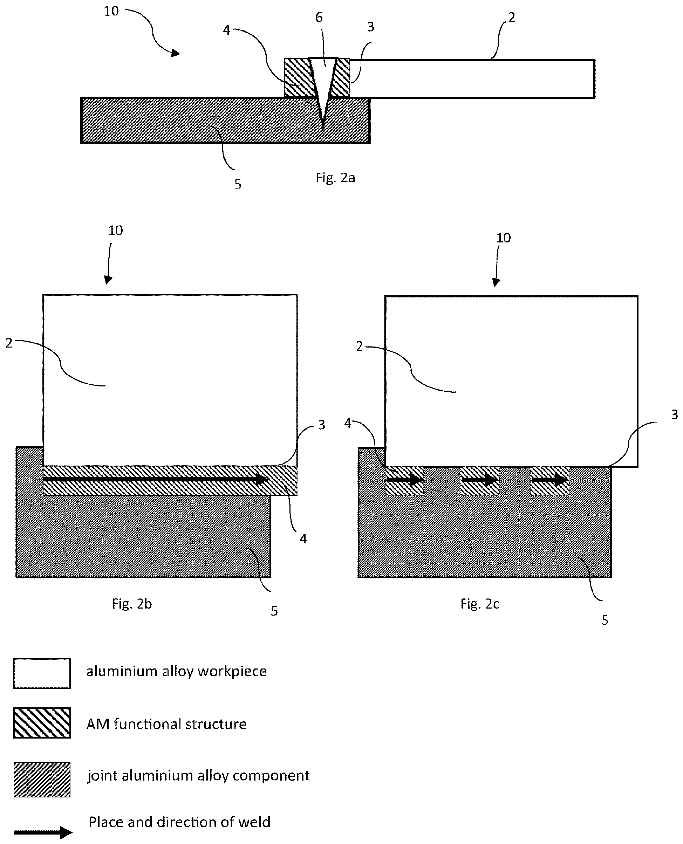

In an example embodiment (ref. Fig. 2a-2c), the AM functional structure may be deposited on an edge or tip of the workpiece to enable an overlapping weld configuration of the thus functionalized workpiece with a joint component. In this example embodiment the AM functional structure may be deposited in the form of a thin and narrow layer or strip of material, such as a micro flange, on an edge or tip of the aluminium workpiece at the locations intended for weld seams. The AM functional structure deposited on an edge or tip of the workpiece may be a continuous layer of material or two or more discrete micro flanges. The AM functional structure may alternatively be deposited as a plurality of discrete, small AM micro flanges. Preferably, the width of the AM functional structure deposited on the edge or tip of the workpiece corresponds with the thickness of the edge or tip of the workpiece at the relevant deposition location. The AM functional structure may extend (height) from about 1 to 10 mm, preferably minimum 1.5 mm, or 2 mm and up to about 5 mm, from the workpiece edge or tip to ensure sufficient amount of the weldable aluminium alloy material in the local molten pool during autogenous laser welding.

During autogenous laser welding the laser beam is preferably passed over the deposited AM functional structure creating a local melt of the deposited AM material. The local molten pool also comprises fused material from the workpiece base material and is penetrating into and partly fusing the underlying joint component. As the laser beam is passing only the deposited AM functional structures, the alloy composition of all weld seams will be modified to a composition that is less solidification crack sensitive.

In an alternative welding configuration, the laser beam may be directed from the opposite side, i.e. from the joint component side, forming a local molten pool of the joint material penetrating into and fusing the AM functional structure and the functionalized workpiece base material. This embodiment, wherein the workpiece is functionalized by depositing AM functional structure on an edge or tip of the workpiece for an overlapping weld configuration, has advantages in that the workpiece base material is only slightly and locally exposed to heat from the AM deposition as the micro flange typically comprises only few layers of deposited material, e.g. only two layers in the case of WAAM deposited layers. Thus, the temper condition properties of the workpiece, such as a T6 temper of a AA6xxx alloy, is largely preserved. However, a workpiece base material in T6 condition tends to overage locally in the most heat affected locations depending on the amount of local heat exposure during AM deposition and welding. In Figs. 2b and 2c, arrows indicate the place(s) and direction of the weld. The direction of the weld can alternatively be in the opposite direction of the arrow.

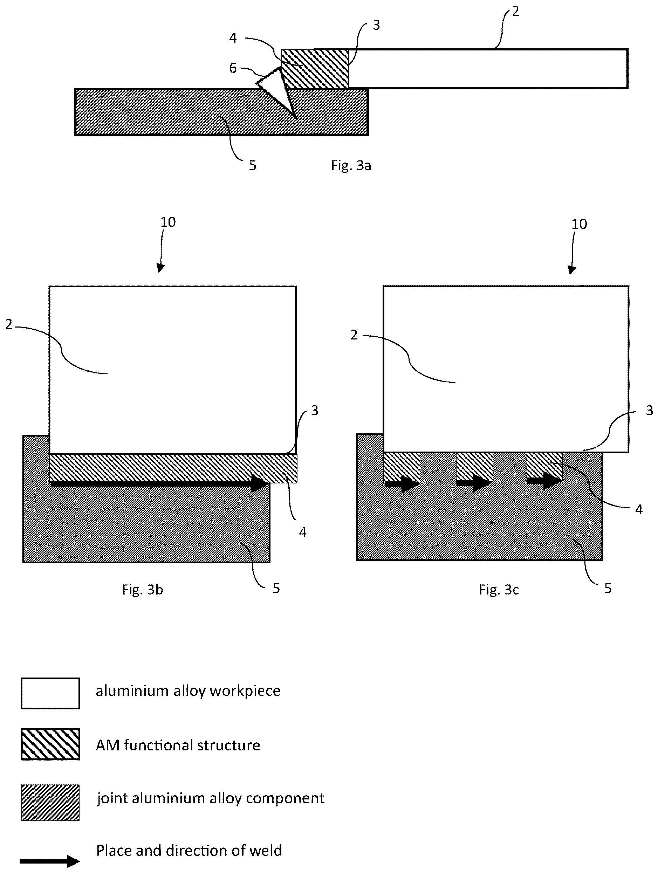

In another example embodiment (ref. Fig. 3a-3c), the functionalized workpiece is similar to the foregoing described embodiment where the AM functional structure may be deposited on an edge or tip of the workpiece, however in the present embodiment the workpiece is functionalized for an edge or fillet weld configuration with a joint component. In this example embodiment the AM functional structure may be an AM micro flange, as previously described above, where the AM functional structure is deposited as a thin and narrow layer or strip, e.g. a micro flange, of material on an edge or tip of the aluminium workpiece at the locations intended for welding. The AM functional structure deposited on an edge or tip of the workpiece may be a continuous strip or micro flange of material or two or more discrete micro flanges. The AM functional structure may alternatively be deposited as a plurality of discrete, small AM micro flanges. Preferably, the width of the AM functional structure deposited on the edge or tip of the workpiece corresponds with the thickness of the edge or tip of the workpiece at the relevant deposition location. The AM functional structure may extend (height) from about 1 to 10 mm, preferably minimum 1.5 mm, or 2 mm and up to about 5 mm, from the workpiece edge or tip to ensure sufficient amount of the weldable aluminium alloy material in the local molten pool during autogenous laser welding.

During the autogenous laser welding the laser beam is passed along the deposited AM functional structure between the AM functional structure and the joint component material creating a fusion zone comprising the deposited AM material, the joint component material and the workpiece base material. As the laser beam is passed along the deposited AM functional structures, the alloy composition of the local molten pool is shifted to a less solidification crack sensitive composition. This embodiment, wherein the workpiece is functionalized by depositing AM functional structure on an edge or tip of the workpiece for an edge or fillet weld configuration, has similar advantages as described with the foregoing embodiment, that the workpiece base material may be less affected by heat, thus preserving largely the temper condition properties of the workpiece, such as a T6 temper of an AA6xxx alloy. However, the most heat affected areas will inevitably have a local overaged condition. In addition, the laser passing between the AM functional structure and the joint material forms a molten pool comprising a relatively high amount of the weldable **AM** material, thus providing a reliable weld seam. In Figs. 3b and 3c, arrows indicate the place(s) and direction of the weld. The direction of the weld can alternatively be in the opposite direction of the arrow.

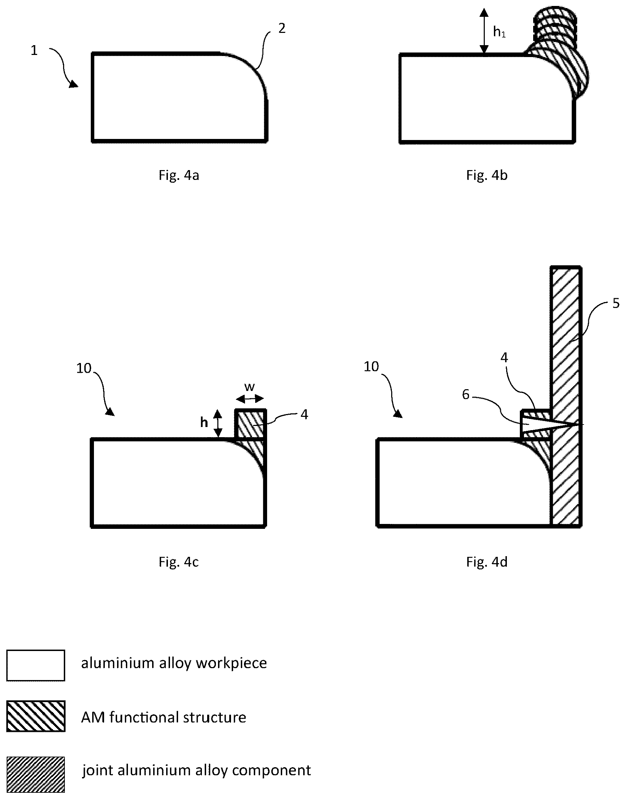

In yet another embodiment (ref. Fig. 4a-4d), the functionalized workpiece comprises an AM functional structure deposited on a surface of the workpiece to enable an overlapping joining, or edge/fillet joining, by autogenous laser weld joining of the functionalized workpiece with a joint component. In addition to enable autogenous laser welding of a crack susceptible base material workpiece, this embodiment of depositing one or more AM functional structure of weldable aluminium alloy on a surface of a workpiece may enable autogenous laser welding of a workpiece having a shape which otherwise would be unsuited or difficult to weld by autogenous laser welding operation. Such workpiece may e.g. include an extruded profile with a curved outer surface (cross-section), a formed workpiece (plate, sheet or extruded profile) with varying angles or bends, etc. The AM functional structure may be deposited as layers on top of each other on a surface of the aluminium workpiece forming a protruding structure or flange with a height, h₁. The AM functional structure may be a continuous flange of material, or two or more discrete flanges deposited on locations adapted for weld seams. After AM deposition the deposited flange is preferably machined, e.g. by milling, to remove rough surface and forming an even surface adapted to welding configuration with the joint component. The maximum height, h, of the protruding AM functional structure is not critical and may be adapted to the relevant workpiece, however, as the AM deposition of the functional structure heats the workpiece, which may lead to local overaging, the height of the AM structure is preferably kept as small as possible while functionalizing the workpiece to enable autogenous laser welding. A minimum height, h, of the AM functional structure deposited on a surface of the workpiece may be from about 1,5 mm, preferably from about 2 mm. The width, w, of an AM functional structure deposited on a surface of the workpiece may be from about 1 to 10 mm, preferably minimum 1.5 mm, or minimum 2 mm to ensure sufficient amount of the weldable aluminium alloy material in the local molten pool formed by the laser beam. As the laser beam will only be passed where the deposited AM structures are located, the alloy composition of all weld seams will be adjusted to a less solidification crack sensitive composition.

The functionalized aluminium alloy workpiece disclosed in any of the above embodiments is formed of a workpiece made of a base aluminium alloy that is moderately or highly susceptible to solidification cracking during remote laser welding operations, i.e. laser welding without application of a filler material. Preferably, the functionalized workpiece aluminium alloy base material is made on an AA6xxx series alloy, such as AA6005, AA6082, AA6060, AA6063, AA6106 to mention some examples, however not limited to these examples. The functionalized aluminium alloy workpiece may alternatively be made of an AA7xxx series alloy or an AA2xxx alloy.

The functionalized aluminium alloy workpiece described above may be manufactured by a method comprising the following steps: (1) providing an aluminium alloy workpiece of a base aluminium alloy that is susceptible to solidification cracking during remote laser welding operations, the workpiece having at least a first surface and at least one edge; (2) depositing an additive manufactured functional structure of a weldable aluminium alloy, selected from an 1xxx series aluminium alloy, an AA4xxx series aluminium alloy, an AA5xxx series aluminium alloy, or an AA8xxx series aluminium, on one or more locations on the at least first surface and/or the at least one edge of the said workpiece, wherein the one or more locations are position(s) configured for autogenous laser welding; and (3) optionally post treating the functionalized aluminium alloy workpiece of step (2).

The AM functional structure is deposited by using a 3D layer printing method. The 3D layer printing method may be a Direct Energy Deposition method or a laser Powder Bed Fusion deposition method or an electron beam Powder Bed Fusion deposition method. Direct Energy Deposition (DED) is an additive manufacturing process that deposits material layer by layer in a precise manner using a focused energy source. The energy source may be laser beam, electron beam, plasma arc or electric arc. A DED process typically includes creating a digital model of the part or structure to be formed, a deposition device that uses the digital model directs a stream of material, in wire or powder form, onto a surface and the energy source heats or fuses the material during deposition. The DED process is advantageous for the present process since it allows precise deposition of material at high speeds compared with other additive manufacturing methods, and it allows for near-final shape production reducing the need of post-processing treatments. The DED method also offers flexibility in material. In the present disclosure it is preferred to use wire arc additive manufacturing (WAAM) for depositing the additive manufactured functional structure. In the WAAM process layers of metal wire are deposited on top of each other, preferably by using a welding robot. The welding torch melts wire feedstock to build a 3D structure according to a desired shape. The WAAM method is preferred as it allows depositing the functional structures onto the aluminium alloy workpiece with relative high speed of the deposition. The use of wire offers high flexibility and low waste as material is only deposited where needed. The energy source in the WAAM process is electric arc.

The aluminium workpiece is preferably prepared before depositing the AM functional feature. The preparing of the workpiece may include cleaning and degreasing, e.g. by using acetone or other suitable cleaner known in the art.

To avoid extensive local heating and thus overaging of a heat-treatable workpiece resulting from the deposition of AM functional structure, the workpiece may be locally cooled during the AM process, e.g. by forced air cooling. The AM functional structure may be deposited in various shapes, e.g. in the form of a straight strip of material, a wavy formed deposit, or other. Using WAAM process, it may be sufficient to deposit two or more layers of the metal wire on top of each other. To avoid excessive heating of the workpiece it is preferred to limit the number of layers, e.g. to maximum 5 layers. However, for a workpiece that is less sensitive to heat input, more layers can be added to achieve desired dimensions of the AM functional structure.

After depositing the AM functional structure, the surface of the deposited material may be machined, e.g. by milling, to even out the surface, obtaining a smooth and flat and/or mating surface to fit the weld configuration with the joint component.

The functionalized aluminium alloy workpiece may be welded with a joint aluminium alloy component by using an autogenic welding process according to conventional welding processes, except that the welding is performed by directing and passing the laser beam on the positions comprising the AM functional structures, causing the AM functional structure material (i.e. the weldable aluminium alloy) to melt, or partly melt, forming a local molten pool of aluminium metal comprised of the AM functional structure material, the base material of the functionalized workpiece and the joint component material.

The welding may be performed by an autogenous laser welding robotic manufacture system/production cell where functionalized aluminium alloy workpiece and the joint component to be welded are placed in a fixture holding the components in a welding position and passing the laser beam across the locations having AM functional structures. The functionalized aluminium alloy workpiece and the joint component may be welded in an overlapping configuration, where, in a preferred embodiment, the laser beam may be directed on the AM functional structure, forming a local molten pool of aluminium metal, penetrating into the joint component positioned on the opposite side in relation to the direction of the laser beam. The local molten pool formed by the laser beam is a mixture of the AM functional structure material, the workpiece base material and the joint component material. In an alternative method of an overlapping welding configuration, the laser beam may be directed from the opposite side, thus on the joint component material at the welding position(s), forming a local molten pool of the joint component material which penetrates into the AM functional structure and workpiece base material.

In an alternative autogenous welding process, the functionalized aluminium alloy workpiece and the joint component may be welded in an edge or fillet configuration, where the laser beam may be directed between the AM functional structure and the joint component, forming a local molten pool of aluminium metal, the joint component and the workpiece base material. The local molten pool formed by the laser beam is thus a mixture of the AM functional structure material, the workpiece base material and the joint component material.

### Description of example embodiments

The present disclosure will be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

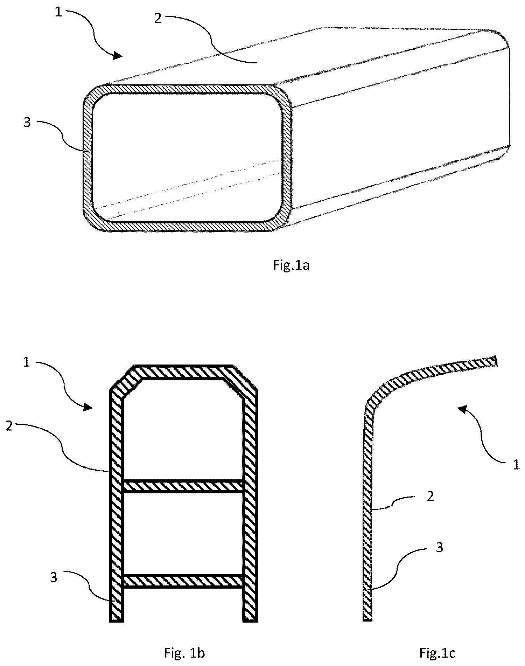

According to Fig. 1a-c, there are illustrated examples of workpieces 1 in the form of extruded profiles. Fig. 1a illustrates a perspective view of a hollow profile, Fig. 1b illustrates a cross-section of an extruded hollow profile with two channels and two flanges, and Fig. 1c illustrates a cross-section of a solid extrusion with an angle. The workpiece of Fig. 1c could also be formed of a bent aluminium sheet or plate. Each of the workpieces illustrated in Fig. 1a-c have a first surface 2 and at least one edge 3.

Fig. 2a illustrates in a side view a functionalized workpiece 10 having an AM functional structure 4, in the form of a micro flange, on its edge 3 and being positioned in an overlapping weld configuration with a joint aluminium alloy component 5. By passing a laser beam from above on the AM functional structure 4 a local pool of molten metal is formed by the heat of the laser, which pool penetrates into the joint component placed beneath the functionalized workpiece. The thus formed local pool of molten metal is composed of the AM functional structure material 4, the workpiece base material 4 and the joint component 5. Fig. 2b illustrates in a top view a functionalized workpiece 10 having an AM functional structure, flange 4, on its edge 3 and being positioned in an overlapping weld configuration with a joint aluminium alloy component 5, corresponding to Fig. 2a. The functionalized workpiece 10 illustrated in Fig. 2b has a continuous flange of AM functional structure 4 deposited on the edge 3 of the workpiece, and further illustrates the position and passing of the laser beam 6 across the AM flange 4. It should be understood that the position of the laser beam 6 may be varied across the deposited flange 4, and need not be passed across the middle of the flange as the objective is to obtain a molten pool composed of material of each of the materials in the welding position, ensuring a reliable weld. The laser beam 6 may be passed continuously across the whole flange 4 or discontinued on local positions across the flange, e.g. spot welding. Fig. 2c illustrates in a top view an alternative embodiment compared with the embodiment illustrated in Fig. 2b, where the AM functional structure is deposited as three discrete flanges 4 on the edge of the functionalized workpiece 10 and the laser beam 6 is passed only across these flanges.

Fig. 3a illustrates in a side view a functionalized workpiece 10 having an AM functional structure, flange 4, on its edge 3 and being positioned in an edge or fillet weld configuration with a joint aluminium alloy component 5. By passing a laser beam along the edge between the AM functional structure 4 and the joint component 5 a local pool of molten metal is formed by the heat of the laser. The thus formed local molten metal pool comprises the AM functional structure material 4, the workpiece base material 1 and the joint component 5. Fig. 3b illustrates in a top view a functionalized workpiece 10 having an AM functional structure, flange 4, on its edge 3 and being positioned in an edge or fillet weld configuration with a joint aluminium alloy component 5, corresponding to Fig. 3a. The functionalized workpiece 10 illustrated in Fig. 3b has a continuous flange of AM functional structure 4 deposited on the edge 3 of the workpiece, and further illustrates the position and passing of the laser beam 6 between the AM flange 4 and the joint component. The laser beam 6 may be passed continuously across the whole flange 4 or discontinued on local positions across the flange, e.g. spot welding. Fig. 3c illustrates in a top view an alternative embodiment compared with the embodiment illustrated in Fig. 3b, where the AM functional structure is deposited as three discrete flanges 4 on the edge of the functionalized workpiece 10 and the laser beam 6 is passed only across these flanges.

Fig. 4a illustrates an end view of an extruded profile workpiece 1 cross-section. The schematically illustrated workpiece 1 cross-section has a curved outer surface 2 which is to be functionalized to enable remote laser welding. In Fig. 4b several layers of AM material have been deposited on a welding position of the curved surface, forming a flange 4, with hight h₁ protruding from the surface. The flange 4 is machined to remove uneven and rough layers, thus forming a smooth and even surface (Fig. 4c), with a height, h, and a width, w, shaped to match the joint component 5 to which it is to be welded. Fig. 4d illustrates the functionalized workpiece 10 in a welding position with a joint component 5. The figure indicates a direction of the laser beam 6 in an overlapping welding configuration. The laser beam 6 may alternatively be directed between the AM functional structure 4 and the joint component 5 enabling an edge or joint welding configuration.

### Experimental tests

Two 300 mm long extruded parts from a 6060 aluminium alloy, in T6 condition, were used to execute tests. The extruded profiles had a hollow cross-sectional shape with flanges, the wall thickness of the flanges as extruded was 2 mm. The following process steps were used during the tests.

The flanges of the extruded parts from the 6060 aluminium alloy were functionalised by depositing additive manufactured functional structures. Thereafter, the functionalized extruded parts were welded by autogenic laser welding to a joint component made of a 6082 aluminium alloy.

The first step comprised AM depositing the functional structure on the flanges of the extruded parts from the 6060 aluminium alloy. The AM deposition was performed by a WAAM process in a robotic welding cell, where two layers of a 4043 aluminium alloy was deposited on the flange of the extrusion over the whole length of the flange. The additive material was made from a 1.2 mm diameter filler wire. Before AM deposition, the extruded profile surface was cleaned with acetone. Between the two layers deposition, compressed air was used to cool the profile, to avoid or reduce overheating and over ageing it. The deposited functional material had an uneven and wavy structure.

The second step of the functionalizing process was to make the uneven and wavy AM deposited surface more smooth and flat. In this step the wavy part of the deposited layer was removed by milling. After machining the micro flange of the AM deposited material was less than 1.2 mm thick and about 2.4 mm high, thus a little higher than the thickness of the flange as extruded.

Before welding the functionalized profile with the joint component, the two parts were cleaned with acetone. For the tests overlap and edge weld configurations were used. The functional structures (WAAM edges) were welded with a 4.5 Kw laser source equipped with Permanova optics. Basic laser beam was used to make joining. Remote laser welding procedures were applied, hence no shielding gas, and filler material were used. The welding operation was performed by directing and passing the autogenous laser welding beam on the location of the additive material.

For the evaluation of the welded seams, macrographs were taken. To observe existence of hot cracks, later samples were anodized to highlight any cracks in between the grains.

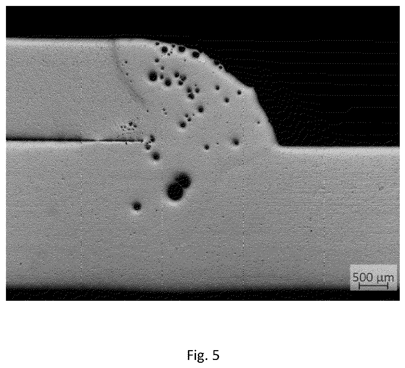

Fig. 5 shows a micrograph of the joined materials after edge welding. It is seen that there are no cracks in the welded zone. The 6082 alloy is an alloy which has a high susceptibility of solidification cracking after laser welding. The present tests demonstrates that a functionalized workpiece of aluminium alloys that are highly prone to solidification cracking can be welded by autogenic laser welding.

## Claims

1. A functionalized aluminium alloy workpiece (10) for use in an autogenous laser welding process, the workpiece (10) base material is made of a first aluminium alloy susceptible to solidification cracking during autogenous laser welding;
**characterized in that**
the workpiece further comprises an additive manufactured functional structure (4) made of a second aluminium alloy that is weldable and not susceptible to solidification cracking;
the additive manufactured functional structure (4) is arranged on one or more locations of the workpiece (10), said locations being configured for a subsequent autogenous laser welding operation to join the workpiece (10) to a joint aluminium alloy component (5); and
wherein the additive manufactured functional structure (4) is configured to melt and mix with the workpiece base material and the joint aluminium alloy component (5) during said subsequent autogenous laser welding operation to form a local molten pool having a composition that is less susceptible to solidification cracking than the first aluminium alloy.

2. The functionalized aluminium alloy workpiece (10), according to claim 1, wherein the first aluminium alloy is selected from an AA2xxx series aluminium alloy, an AA6xxx series aluminium alloy or an AA7xxx series aluminium alloy.

3. The functionalized aluminium alloy workpiece, according to the preceding claims, wherein the second weldable aluminium alloy is selected from an AA1xxx series aluminium alloy, an AA4xxx series aluminium alloy, an AA5xxx series, or an AA8xxx- aluminium alloy.

4. The functionalized aluminium alloy workpiece (10), according to any one of the preceding claims, wherein the workpiece (10) is an extruded profile, a sheet material, a wrought material, a forged material, or a machined material.

5. The functionalized aluminium alloy workpiece (10) according to any one of the preceding claims, wherein the workpiece (10) has at least one edge (3) and the additive manufactured functional structure (4) is arranged on the at least one edge (3).

6. The functionalized aluminium alloy workpiece (10) according to claim 5, wherein the additive manufactured functional structure (4) extends continuously over a length of the at least one edge (3), or the additive manufactured functional structure (4) is arranged as two or more discrete structures along the at least one edge (3).

7. The functionalized aluminium alloy workpiece (10) according to any one of claims 1-4, wherein the workpiece (10) has at least a first surface (2) and the additive manufactured functional structure (4) is arranged on the first surface (2).

8. The functionalized aluminium alloy workpiece (10) according to claim 7, wherein the additive manufactured functional structure (4) extends continuously over a length of the first surface (2), or the additive manufactured functional structure (4) is arranged as two or more discrete structures on the first surface (2).

9. The functionalized aluminium alloy workpiece (10) according to any one of the preceding claims, wherein the additive manufactured functional structure (4) is deposited by an additive manufacturing deposition method selected from Direct Energy Deposition, laser Powder Bed Fusion or electron beam Powder Bed Fusion.

10. The functionalized aluminium alloy workpiece (10) according to claim 9, wherein the Direct Energy Deposition method is wire arc additive manufacturing (WAAM).

11. A method for joining a functionalized aluminium alloy workpiece (10) according to any one of claims 1-10 with one or more joint aluminium alloy component(s) (5) using autogenous laser welding, the method comprising the steps of:
a. providing the functionalized aluminium alloy workpiece, and the one or more joint aluminium alloy component(s) (5);
b. positioning the workpiece (10) and the joint aluminium alloy component(s) (5) relative to each other in a welding configuration; and
c. welding the workpiece (10) to the joint aluminium alloy component(s) (5) by directing an autogenous laser welding beam on the additive manufactured functional structure (4), thereby melting the additive manufactured functional structure (4), a portion of the workpiece (10) base material, and a portion of the joint aluminium alloy component (5) to form a local molten pool, fusing the workpiece (10) and joint aluminium alloy component (5) together, thereby forming a weld seam.

12. The method according to claim 11, where in step b), the workpiece (10) and the joint aluminium alloy component(s) (5) are positioned in an overlapping weld configuration.

13. The method according to claim 11, where in step b), the workpiece (10) and the joint aluminium alloy component(s) (5) are positioned in an edge or fillet weld configuration.

14. Using a functionalized aluminium alloy workpiece, according to any one of claims 1-10, in an autogenous laser welding process for joining the functionalized aluminium alloy workpiece with one or more joint aluminium alloy component(s).
